# EUROPÄISCHE PATENTSCHRIFT

(11) **EP 1 688 606 B1**
(45) Veröffentlichungstag und Bekanntmachung des Hinweises auf die Patenterteilung: **07.11.2007**
(21) Anmeldenummer: 05107402.9
(22) Anmeldetag: 11.08.2005
(51) Int. Cl.: F02D 41/34, F02D 41/40

(54) **Verfahren zur Vergrößerung des Regelbereichs für die Gleichstellung von Einspritzmengenunterschieden**
Method for increasing the controlling range for equalizing the injection quantities
Méthod d'augmentation de la gamme de réglages pour l'équilibrage de la quantité d'injection

(30) Priorität: 14.01.2005 DE 102005001887
(43) Veröffentlichungstag der Anmeldung: 09.08.2006
(73) Patentinhaber: Siemens VDO Automotive AG, 93055 Regensburg (DE)
(72) Erfinder: Dietl, Roland, 94315, Straubing (DE); Kastner, Oliver, 93093, Donaustauf (DE); Rabl, Hans-Peter, 93309, Kelheim (DE)

(56) Entgegenhaltungen:
- EP-A- 1 340 900
- DE-A1- 19 700 711
- DE-A1- 19 720 009

## Beschreibung

Die Erfindung betrifft ein Verfahren zur Vergrößerung des Regelbereichs für die Gleichstellung von Einspritzmengenunterschiede, insbesondere bei Brennkraftmaschinen mit Mehrfacheinspritzungen gemäß dem unabhängigen Anspruch 1.

Verfahren zur Gleichstellung der Einspritzmengenunterschiede zwischen den Zylindern einer Brennkraftmaschine erkennen Unterschiede in den Einspritzmengen zwischen den Zylindern und gleichen ggf. diese Unterschiede aus. Gerade für die Diagnose kleiner Einspritzmenge, insbesondere von Voreinspritzmengen bei Mehrfacheinspritzung von Dieselkraftmaschinen, die im Bereich von wenigen Milligramm liegen, ist eine Diagnose der Einspritzmengen entscheidend für die Einhaltung der Abgasimmission.

Ein solches Verfahren ist beispielsweise in der nichtveröffentlichten Anmeldung DE 10 2004 006 293 offenbart.

Dabei hat es sich herausgestellt, dass bei der Gleichstellung von Injektoren mittels des Aktorsignals stationäre Betriebspunkte in Abhängigkeit vom Einspritzdruck mehrere Sekunden eingefahren werden müssen, um die Aktorenergie des jeweiligen Injektors ermitteln zu können. Bei einer aktiven Regelung wird die Zeit zwischen der Ansteuerung des Injektors und des Aktorsignals aller Injektoren auf einen im Kennfeld gespeicherten Wert eingestellt. Da eine Mindest-Ansteuerdauer des Injektors für die Regelung erforderlich ist, dies entspricht einer Mindest-Einspritzmenge, wird durch die Verwendung der Mehrfacheinspritzung (eine Haupt- und mehrere Vor- und Nacheinspritzungen), der Betriebsbereich, in dem geregelt werden kann, kleiner. Mehrfacheinspritzungen werden zur Reduzierung von Emissionen und auch zur Reduzierung des Verbrennungsgeräusches erfolgreich eingesetzt. Das folgende Beispiel soll das Problem verdeutlichen: Für einen Lastpunkt A ist eine Fünffacheinspritzung von jeweils ein Milligramm pro Hub erforderlich. Allerdings benötigt die Regelung zur Zylindergleichsetzung eine Mindestmenge von drei Milligramm pro Hub.

Eine Detektion und Regelung auf das Aktorsignal ist gerade dann erforderlich, wenn sich die Bedingungen des Injektors ändern, wie zum Beispiel durch das Aufheizen nach einem Kaltstart. Dabei ist es möglich, dass das Fahrzeug nach einem Kaltstart nur im niedrigen Lastbereich betrieben wird, so dass keine Möglichkeit zur Zylindergleichstellung gegeben ist. In einem solchen Fahrzyklus (Kaltstart und anschließende Fahrt im niedrigen Lastbereich) ändert sich die die Kühlwassertemperatur von der Umgebungstemperatur auf die Zieltemperatur von ca. 90°C. Dabei kann sich aufgrund des Aufheizvorganges die Einspritzmenge um ca. 40 % verändern. Eine Regelung des Injektors auf das Aktorsignal ist immer dann erforderlich, sobald sich die Betriebsbedingungen geändert haben(Temperatur, Raildruck, usw.).

Somit liegt der Erfindung die Aufgabe zugrunde ein Verfahren zur Vergrößerung des Regelbereichs für die Gleichstellung von Einspritzmengenunterschiede vorzustellen, so dass die Regelung auch in niedrigen Lastbereichen möglich wird.

Diese Aufgabe wird erfindungsgemäß durch die Merkmale des Patentanspruchs 1 gelöst. Die abhängigen Ansprüche betreffen vorteilhafte Weiterbildungen und Ausgestaltungen der Erfindung.

Erfindungsgemäß wird das Verfahren zur Vergrößerung des Regelbereichs für die Gleichstellung von Einspritzmengenunterschiede, insbesondere bei Brennkraftmaschinen mit Mehrfacheinspritzungen, durchgeführt, wenn die maximale Einspritzmenge aller Einzeleinspritzungen mindestens eines Injektors der Brennkraftmaschine geringer ist als die für eine Regelung zur Zylindergleichstellung erforderliche Mindestmenge. Dann wird das Einspritzmuster mindestens eines Injektors derart verändert, dass die Einspritzmenge mindestens einer Einzeleinspritzung größer gleich ist wie die erforderliche Mindestmenge und die Drehmomentausgabe der Brennkraftmaschine für den Fahrzeugantrieb unverändert bleibt.

Mit dieser Maßnahme kann die Regelung zur Zylindergleichstellung auch in niedrigen Lastbereichen angewandt werden. Die Werte der Regelung werden den charakteristischen Größen des Betriebspunktes, die auch die Haupteinflussgrößen sind (Einspritzdruck, Temperatur, usw.) zugeordnet. Befindet sich die Brennkraftmaschine an einem Betriebspunkt, in dem die Regelung des Aktorsignals wegen zu geringer Ansteuerdauer (= zu geringe Einspritzmenge) nicht möglich ist, wird zunächst mit den Vorsteuerwerten oder bereits gelernten Werten die Einspritzung durchgeführt. Dabei ist es insbesondere vorteilhaft, dass das erfindungsgemäße Verfahren ohne zusätzliche Sensorik auskommt und das Verfahren schnell durchführbar ist, denn wenige Kolbenhübe sind dafür ausreichend. Damit lässt sich die Zuverlässigkeit erhöhen ohne zusätzlichen Kraftstoff zu verbrauchen.

Eine weitere vorteilhafte Ausgestaltung der Erfindung ist es, dass erfindungsgemäße Verfahren erst dann durchzuführen, wenn mindestens eine Aktivierungsbedingung erfüllt ist. Darunter versteht man sich ändernde Betriebszustände oder den Ablauf einer gewissen Zeitspanne. Damit wird sichergestellt, dass in regelmäßigen Zeitabständen und ungünstigen Ansteuerzeiten eine Zylindergleichstellung durchgeführt werden kann.

Als vorteilhaft hat es sich erwiesen, dass Einspritzmuster eines einzelnen Injektors zu verändern, in dem die Anzahl der Einspritzungen und/oder die Einspritzdauer angepasst wird. Als besonders vorteilhaft hat es sich gezeigt, dass die Einspritzmenge des Injektors vor Änderung des Einspritzmusters genauso groß ist wie die Gesamteinspritzmenge des Injektors nach Änderung des Einspritzmusters je Zündtakt. Um das obige Beispiel der Fünffacheinspritzungen je ein Milligramm pro Hub einer Regelung zugänglich zu machen, kann das erfindungsgemäße Verfahren das Einspritzmuster beispielsweise derart verändern, dass eine Voreinspritzung mit einem Milligramm pro Hub und eine Haupteinspritzung mit vier Milligramm pro Hub eingestellt werden.

Eine weitere vorteilhafte Ausgestaltung der Erfindung ist es, mindestens einen Zylinder abzuschalten. Dabei ist es insbesondere vorteilhaft die in Zündreihenfolge nur jeden zweiten Zylinder abzuschalten. Die Zylinderabschaltung kann durch das Abschalten des Injektors erfolgen, d.h. im abgeschalteten Zylinder wird durch den Injektor kein Kraftstoff in den Zylinder eingespritzt. Damit die Drehmomentausgabe der Brennkraftmaschine für den Fahrzeugantrieb gleich bleibt, müssen in den aktiven Zylinder näherungsweise doppelt so viel Kraftstoff eingespritzt werden. Für das obige Beispiel mit den Fünffacheinspritzungen je ein Milligramm pro Hub wäre diese Maßnahme nicht ausreichend, so dass eine Kombination aus der Zylinderabschaltung und der Änderung des Einspritzmusters erfolgen muss.

Ist dagegen im normalen Betrieb ein Einspritzmuster mit drei Einspritzungen, wobei die Voreinspritzung ein Milligramm pro Hub, die Haupteinspritzung zwei Milligramm pro Hub und die Nacheinspritzung ein Milligramm pro Hub aufweisen, so ist eine Zylinderabschaltung völlig ausreichend, da durch diese Maßnahme die entsprechenden Mengen näherungsweise verdoppelt werden. Mit dieser Maßnahme hat dann die Haupteinspritzung vier Milligramm pro Hub, wobei eine Mindestmenge von drei Milligramm pro Hub für eine Regelung erforderlich ist.

Damit alle Zylinder geregelt werden können, müssen in einer Brennkraftmaschine mit einer geraden Anzahl von Zylinder die bisher deaktivierten Zylinder eingeschaltet und die bisher aktivierten Zylinder abgeschaltet werden. Diese Maßnahme ist bei einer Brennkraftmaschine mit ungerader Anzahl von Zylindern nicht notwendig. Wird beispielsweise bei einem Fünfzylinder jeder zweite Zylinder in Zündreihenfolge abgeschaltet, so erhält man folgende Zündreihenfolge: 1-3-5-2-4-1, d. h. spätestens nach vier Umdrehungen sind alle Zylinder einmal aktiviert worden.

Als eine weitere vorteilhafte Ausgestaltung der Erfindung hat es sich erwiesen, die Last zu erhöhen, indem zusätzliche Verbraucher eingeschaltet werden, wie Heckscheibenheizung, Glühkerzen, Beleuchtung, Sitzheizung und/oder Klimaanlage. Eine weitere Möglichkeit den Verbrauch zu erhöhen ergibt sich durch die Verschlechterung des Motorwirkungsgrades. Dazu ist es ausreichend den Einspritzbeginn entsprechend zu verschieben.

Weitere vorteilhafte Ausgestaltungen der Erfindung sind in den übrigen abhängigen Ansprüchen angegeben.

Die Erfindung wird nachfolgend unter Bezugnahme auf die schematische Zeichnung beispielhaft erläutert. Dabei zeigt:

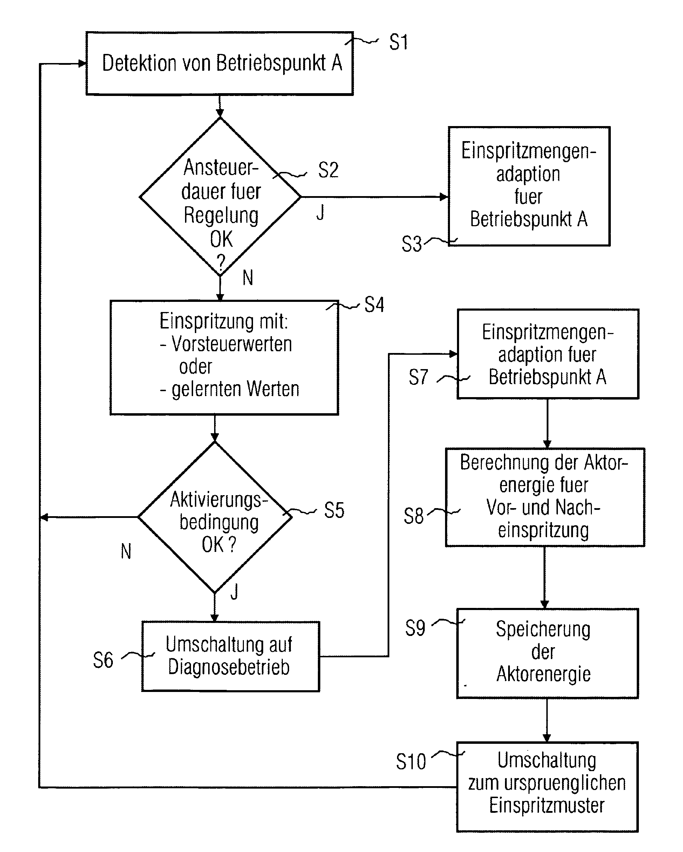

- Figur 1: ein Flussdiagramm zur Zylindergleichstellung, wobei das erfindungsgemäße Verfahren angewandt wird.

Figur 1 zeigt ein Flussdiagramm zur Zylindergleichstellung, wobei das erfindungsgemäße Verfahren angewandt wird. In Schritt S1 wird der Betriebspunkt A der Brennkraftmaschine detektiert. Dabei werden unter anderem die Kraftstofftemperatur, die Umgebungstemperatur, der Raildruck, und/oder der Einspritzdruck erfasst. In Schritt S2 wird geprüft, ob die Ansteuerdauer für die Regelung ausreichend lang ist. Die Ansteuerdauer muss derart gewählt sein, dass pro Hub mindestens drei Milligramm Kraftstoff pro Hub durch den Injektor fließt, damit genügend Zeit für die Regelung vorhanden ist. Ist dies der Fall, d. h. die Ansteuerdauer ist ausreichend lang, so wird die Einspritzmengeadaption für diesen Betriebspunkt in Schritt S3 gemäß der in der nicht veröffentlichten Anmeldung DE 10 2004 006 offenbarten Verfahren durchgeführt.

Ist die Ansteuerdauer doch zu gering, so erfolgt die Ansteuerung der Injektoren in Schritt S4 anhand von Vorsteuerwerten oder bereits gelernten Werten.

In Schritt S5 wird überprüft, ob der so genannte Diagnosebetrieb gestartet werden soll. Dazu wird überprüft ob die Aktivierungsbedingungen erfüllt sind. Dazu gehören unter anderem sich ändernde Betriebszustände oder der Ablauf einer gewissen vordefinierten Zeitspanne. Sind die Aktivierungsbedingungen nicht erfüllt so beginnt das Verfahren wieder in Schritt S1.

Sind die Aktivierungsbedingungen dagegen erfüllt so wird in Schritt S6 auf den so genannten Diagnosebetrieb umgeschaltet. Dabei wird die Einspritzmenge pro Hub ausreichend erhöht ohne dabei das Drehmomentausgabe am Fahrzeugantrieb zu verändern.

In Schritt S7 wird mit den neuen Einspritzmustern für den Betriebspunkt A die Einspritzmengenadaption durchgeführt. Da zur sicheren Auswertung eines Aktorsignals die Haupteinspritzung heran gezogen wird, muss in Schritt S8 aus der Energie für die Haupteinspritzung die Energie für die Voreinspritzung und die Energie für die Nacheinspritzung berechnet werden. Als Ergebnis sind die Einspritzbeginne und damit die Mengen der einzelnen Injektoren aufeinander angeglichen. Diese neue Adaptionswerte werden ermittelt und dem Betriebszustand A zugeordnet, in dem sie in Schritt S9 abgespeichert werden. Nach Durchführung der Zylindergleichstellung wird in Schritt S10 der Diagnosebetrieb abgeschaltet. Darunter ist zu verstehen, dass auf das ursprüngliche Einspritzmuster umgeschaltet wird. Zur kontinuierlichen Überprüfung bzw. Adaption der einzelnen Zylinder erfolgt nach Schritt S10 ein Sprung zu Schritt S1 und das gesamte Verfahren beginnt wieder von vorne an.

## Patentansprüche

1. Verfahren zur Vergrößerung des Regelbereichs für die Gleichstellung von Einspritzmengenunterschiede, insbesondere bei Brennkraftmaschinen mit Mehrfacheinspritzungen, **dadurch gekennzeichnet, dass** wenn die maximale Einspritzmenge aller Einzeleinspritzungen mindestens eines Injektors der Brennkraftmaschine geringer ist als die für eine Regelung zur Zylindergleichstellung erforderliche Mindestmenge, dann wird das Einspritzmuster mindestens eines Injektors derart verändert, dass die Einspritzmenge mindestens einer Einzeleinspritzung größer gleich ist wie die erforderliche Mindestmenge und die Drehmomentausgabe der Brennkraftmaschine für den Fahrzeugantrieb gleich bleibt.

2. Verfahren nach Anspruch 1, **dadurch gekennzeichnet, dass** das Verfahren erst durchgeführt wird, wenn mindestens eine Aktivierungsbedingung erfüllt ist.

3. Verfahren nach mindestens einem der vorherigen Ansprüche, **dadurch gekennzeichnet, dass** das Einspritzmuster eines einzelnen Injektors geändert wird, in dem die Anzahl der Einzeleinspritzungen und/oder die Einspritzdauer angepasst wird.

4. Verfahren nach Anspruch 3, **dadurch gekennzeichnet, dass** die gesamte Einspritzmenge des Injektors vor Änderung des Einspritzmusters gleich der gesamten Einspritzmenge des Injektors nach Änderung des Einspritzmusters je Zündtakt ist.

5. Verfahren nach mindestens einem der Ansprüche, **dadurch gekennzeichnet, dass** die Haupteinspritzung des Injektors mindestens die erforderliche Mindestmenge () aufweist.

6. Verfahren nach mindestens einem der Ansprüche, **dadurch gekennzeichnet, dass** die Änderung des Einspritzmusters für jeden einzelnen aktivierten Injektor der Brennkraftmaschine durchgeführt wird.

7. Verfahren nach mindestens einem der Ansprüche, **dadurch gekennzeichnet, dass** mindestens ein Zylinder abgeschaltet wird.

8. Verfahren nach Anspruch 7, **dadurch gekennzeichnet, dass** in Zündreihenfolge jeder zweite Zylinder abgeschaltet wird.

9. Verfahren nach Anspruch 8, **dadurch gekennzeichnet, dass** nach der Zylindergleichstellung der aktivierten Zylinder, die bisher deaktivierten Zylinder eingeschaltet und die bisher aktivierten Zylinder abgeschaltet werden.

10. Verfahren nach mindestens einem der vorigen Ansprüche, **dadurch gekennzeichnet, dass** die Last erhöht wird, insbesondere durch das Einschalten von zusätzlichen Verbrauchern, und/oder der Motorwirkungsgrad verschlechtert wird, insbesondere durch Verschiebung des Einspritzbeginns.

## Claims

1. Method for enlarging the control range for equalising injection quantity differences, in particular in internal combustion engines using multiple injections, **characterised in that**, if the maximum injection quantity of all the individual injections of at least one injector of the internal combustion engine is lower than the minimum quantity required for control for equalising the cylinders, then the injection pattern of at least one injector is changed such that the injection quantity of at least one individual injection is greater than or equal to the required minimum quantity and the torque output of the internal combustion engine for the vehicle drive remains the same.

2. Method according to claim 1, **characterised in that** the method is implemented only if at least one activation condition is satisfied.

3. Method according to at least one of the preceding claims, **characterised in that** the injection pattern of an individual injector is modified by adjusting the number of individual injections and/or the duration of injection.

4. Method according to claim 3, **characterised in that**, for each ignition cycle, the total injection quantity of the injector before modification of the injection pattern is equal to the total injection quantity of the injector after modification of the injection pattern.

5. Method according to at least one of the claims, **characterised in that** the main injection of the injector comprises at least the required minimum quantity ().

6. Method according to at least one of the claims, **characterised in that** the modification of the injection pattern is carried out for each individual activated injector of the internal combustion engine.

7. Method according to at least one of the claims, **characterised in that** at least one cylinder is disabled.

8. Method according to claim 7, **characterised in that** every other cylinder, in ignition sequence, is disabled.

9. Method according to claim 8, **characterised in that** after cylinder equalisation of the activated cylinders, the previously deactivated cylinders are enabled and the previously activated cylinders are disabled.

10. Method according to at least one of the preceding claims, **characterised in that** the load is increased, in particular by connecting additional consumers, and/or the engine efficiency is decreased, in particular by delaying the injection start.

## Revendications

1. Procédé pour augmenter la plage de réglage pour la mise à niveau de différences de quantités injectées, en particulier dans le cas de moteurs à combustion interne avec injections multiples, **caractérisé en ce que**, si la quantité injectée maximale de toutes les injections individuelles d'au moins un injecteur du moteur à combustion est plus faible que la quantité minimale nécessaire pour un réglage pour la mise à niveau des cylindres, le modèle d'injection d'au moins un injecteur est modifié de telle sorte que la quantité injectée d'au moins une injection individuelle est supérieure à la quantité minimale nécessaire et la sortie du couple du moteur à combustion interne reste identique pour l'entraînement du véhicule.

2. Procédé selon la revendication 1, **caractérisé en ce que** le procédé est appliqué seulement lorsqu'au moins une condition d'activation est satisfaite.

3. Procédé selon au moins l'une quelconque des revendications précédentes, **caractérisé en ce que** le modèle d'injection d'un injecteur individuel est modifié en adaptant le nombre des injections individuelles et/ou la durée d'injection.

4. Procédé selon la revendication 3, **caractérisé en ce que** la quantité injectée totale de l'injecteur avant la modification du modèle d'injection est identique à la quantité injectée globale de l'injecteur après la modification du modèle d'injection par cycle d'allumage.

5. Procédé selon au moins l'une quelconque des revendications, **caractérisé en ce que** l'injection principale de l'injecteur présente au moins la quantité minimale nécessaire.

6. Procédé selon au moins l'une quelconque des revendications, **caractérisé en ce que** la modification du modèle d'injection est effectuée pour chaque injecteur activé individuel du moteur à combustion interne.

7. Procédé selon au moins l'une quelconque des revendications, **caractérisé en ce qu'**au moins un cylindre est déconnecté.

8. Procédé selon la revendication 7, **caractérisé en ce qu'**un cylindre sur deux est déconnecté dans l'ordre d'allumage.

9. Procédé selon la revendication 8, **caractérisé en ce que**, après la mise à niveau des cylindres activés, les cylindres désactivés jusqu'à présent sont connectés et les cylindres activés jusqu'à présent sont déconnectés.

10. Procédé selon au moins l'une quelconque des revendications précédentes, **caractérisé en ce que** la charge est augmentée, en particulier par la mise en service de consommateurs supplémentaires, et/ou le rendement du moteur est dégradé, en particulier par déplacement du début d'injection.
